# EUROPEAN PATENT APPLICATION

(11) **EP 4 752 398 A1**
(43) Date of publication of application: **03.06.2026**
(21) Application number: 25219309.9
(22) Date of filing: 28.11.2025
(51) Int. Cl.: F16H 57/04, B60K 11/02

(54) **DYNAMIC POWER TRANSMISSION DEVICE**

(30) Priority: 02.12.2024 JP 2024209266
(71) Applicant: Toyota Jidosha Kabushiki Kaisha, Toyota-shi, Aichi-ken 471-8571 (JP)
(72) Inventor: OHGATA, Yusuke, TOYOTA-SHI, AICHI-KEN, 471-8571 (JP); OKAZAKI, Sho, TOYOTA-SHI, AICHI-KEN, 471-8571 (JP)
(74) Representative: Cabinet Beau de Loménie

(57) **Abstract**

A dynamic power transmission device (1) includes: a single oil pump (100) configured to be able to feed oil; an electric motor (200); a lubrication-object member (300) that is lubricated with the oil; an oil passage (L) configured to supply the oil fed from the oil pump (100) to the electric motor (200) and the lubrication-object member (300); a flow amount regulation unit (400) provided in the oil passage (L) and configured to be able to regulate the supply amount of the oil to the electric motor (200); and a control unit (501) configured to control the flow amount regulation unit (400).

## Description

### BACKGROUND OF THE INVENTION

### 1. Field of the Invention

The present disclosure relates to a dynamic power transmission device.

### 2. Description of Related Art

For example, Japanese Unexamined Patent Application Publication No. 2016-125629 (JP 2016-125629 A) discloses a transmission that is equipped in a vehicle. The transmission includes a first rotating electric machine, a second rotating electric machine, a planetary gear, an oil pump, and an oil pan.

### SUMMARY OF THE INVENTION

In the transmission described in JP 2016-125629 A, the frequency of the actuation of the oil pump based on a requirement for lubrication is higher than the frequency of the actuation of the oil pump based on a requirement for the rotating electric machines, and the work amount of the oil pump that is required based on the requirement for the rotating electric machines is larger than the work amount of the oil pump that is required based on the requirement for lubrication. For satisfying the requirements, the oil pump needs to be driven at the work amount meeting the requirement for the rotating electric machine and at the frequency meeting the requirement for lubrication. Therefore, the work amount (consumed electric power) of the oil pump is large.

Hence, the present disclosure provides a dynamic power transmission device that allows the reduction in the work amount of the oil pump.

An aspect of the present disclosure relates to a dynamic power transmission device including a single oil pump, an electric motor, a lubrication-object member, an oil passage, a flow amount regulation unit, and a control unit. The single oil pump is configured to be able to feed oil. The lubrication-object member is lubricated with the oil. The oil passage is configured to supply the oil fed from the oil pump to the electric motor and the lubrication-object member. The flow amount regulation unit is provided in the oil passage, and is configured to be able to regulate the supply amount of the oil to the electric motor. The control unit is configured to control the flow amount regulation unit.

In the dynamic power transmission device in the above aspect, the control unit can regulate the supply amount of the oil to the electric motor, and therefore, the electric motor is effectively cooled, for example, by increasing the supply amount of the oil to the electric motor, so that the frequency of the request for the cooling of the electric motor is reduced. Therefore, the work amount of the oil pump can be reduced.

In the dynamic power transmission device in the aspect of the present disclosure, the oil passage may include a first oil passage configured to supply the oil fed from the oil pump to the electric motor, and a second oil passage branching from the first oil passage and configured to supply the oil fed from the oil pump to the lubrication-object member. Moreover, the flow amount regulation unit may be provided at a site that is of the first oil passage and that is between a connection portion connecting the first oil passage with the second oil passage, and the electric motor.

In the dynamic power transmission device having the above configuration, the flow amount regulation unit is provided at the site that is of the first oil passage and that is on the downstream side of the connection portion connecting the first oil passage with the second oil passage, and therefore, it is possible to more accurately regulate the amount of the oil that is supplied to the electric motor.

In the dynamic power transmission device in the aspect of the present disclosure, the control unit may be configured to control an opening degree of the flow amount regulation unit, based on a temperature of the electric motor.

In the dynamic power transmission device having the above configuration, the control unit may be configured to increase the opening degree of the flow amount regulation unit when the temperature of the electric motor is equal to or higher than a high-reference temperature.

In the dynamic power transmission device in the aspect of the present disclosure, the control unit may be configured to control the opening degree of the flow amount regulation unit, based on a temperature of the oil that flows into the electric motor.

In the dynamic power transmission device in the aspect of the present disclosure, the control unit may be configured to control the opening degree of the flow amount regulation unit, based on a pressure of the periphery of the electric motor.

In the dynamic power transmission device in the aspect of the present disclosure, the electric motor may include a case that houses a rotor and a stator. Moreover, the control unit may be provided in the case.

In the dynamic power transmission device in the aspect of the present disclosure, the flow amount regulation unit may be constituted by a magnetic valve.

The dynamic power transmission device in the aspect of the present disclosure may further include a pump control unit configured to control the oil pump. Moreover, the pump control unit may be configured to control a rotation speed of the oil pump, based on the opening degree of the flow amount regulation unit.

In the dynamic power transmission device having the above configuration, for example, in the case where the opening degree of the flow amount regulation unit, that is, the supply amount of the oil that is required for the electric motor is relatively small, it is possible to reduce the rotation speed (work amount) of the oil pump.

As described above, with the dynamic power transmission device in the present disclosure, it is possible to provide the dynamic power transmission device that allows the reduction in the work amount of the oil pump.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view schematically showing a dynamic power transmission device in an exemplary embodiment of the present disclosure;
FIG. 2 is a circuit diagram schematically showing the dynamic power transmission device shown in FIG. 1;
FIG. 3 is a diagram schematically showing an electric motor shown in FIG. 1; and
FIG. 4 is a flowchart showing an exemplary control content of a control unit shown in FIG. 2.

### DETAILED DESCRIPTION OF EMBODIMENTS

An embodiment of the present disclosure will be described with reference to the drawings. In the drawings referred to below, the same members or members equivalent thereto are denoted by the same numerals.

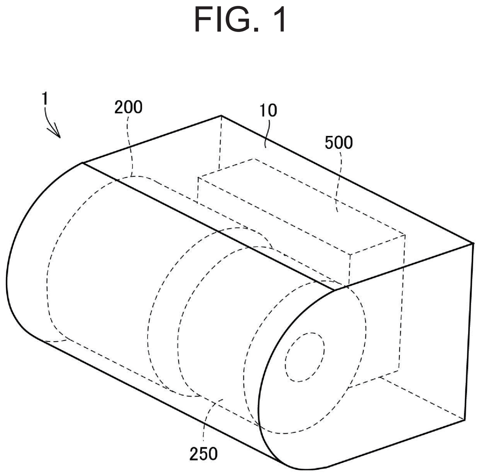

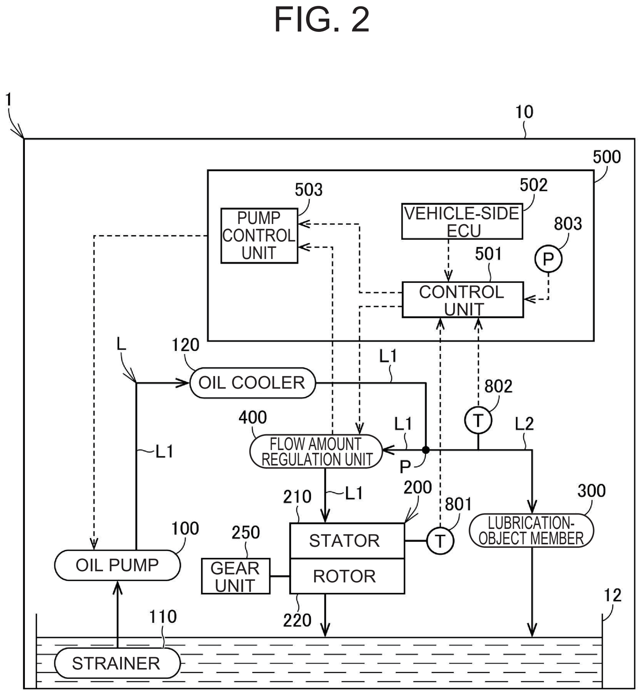

FIG. 1 is a diagram schematically showing a dynamic power transmission device in an embodiment of the present disclosure. FIG. 2 is a circuit diagram schematically showing the dynamic power transmission device.
A dynamic power transmission device 1 in the embodiment is equipped in a vehicle. Examples of the vehicle include a hybrid electric vehicle, a plug-in hybrid electric vehicle, and a battery electric vehicle.

As shown in FIG. 1 and FIG. 2, the dynamic power transmission device 1 includes a case 10, a single oil pump 100, an electric motor 200, a lubrication-object member 300, an oil passage L, a flow amount regulation unit 400, and a control device 500.
The case 10 houses the single oil pump 100, the electric motor 200, the lubrication-object member 300, the oil passage L, the flow amount regulation unit 400, and the control device 500. A lower portion of the case 10 configures an oil retaining portion 12.

The oil pump 100 can feed oil. The oil pump 100 suctions oil from the oil retaining portion 12 through a strainer 110.

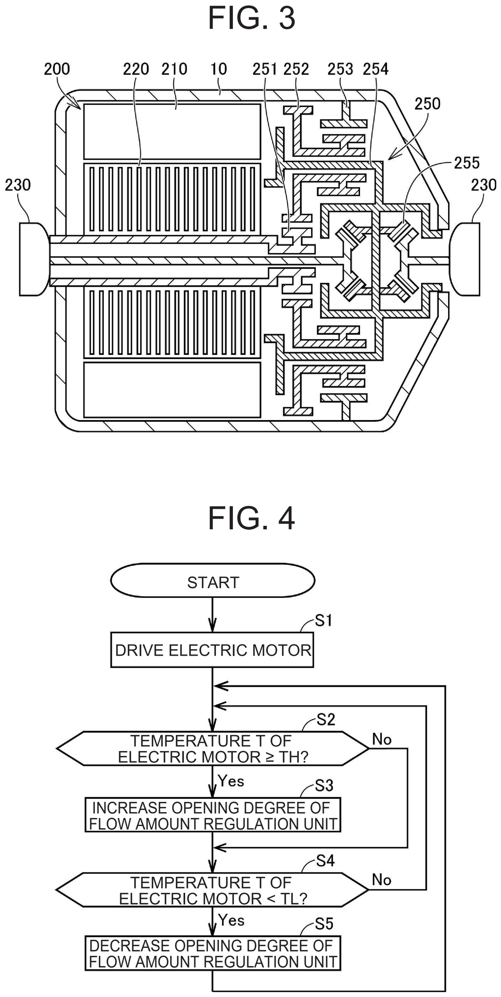

For example, the electric motor 200 is constituted by a motor. FIG. 3 shows an example of the electric motor 200. As shown in FIG. 3, the electric motor 200 includes a stator 210, a rotor 220, a drive shaft 230, a case 240, and a gear unit 250.

The rotor 220 is disposed on the inside of the stator 210, and the drive shaft 230 is disposed on the inside of the rotor 220. The case 240 houses the stator 210, the rotor 220, and the drive shaft 230.

The gear unit 250 is connected to the drive shaft 230. The gear unit 250 is disposed in the case 240. The gear unit 250 includes a sun gear 251, a stepped pinion 252, a ring gear 253, a carrier 254, and a differential gear 255.

The sun gear 251 is connected to the drive shaft 230. The stepped pinion 252 includes two gear portions. One of the two gear portions engages with the sun gear 251, and the other engages with the ring gear 253. The ring gear 253 is fixed on the case 240. The stepped pinion 252 is supported by the carrier 254. The input from the sun gear 251 is input to the stepped pinion 252 supported by the carrier 254. The stepped pinion 252 receives the reaction force of the ring gear 253, and transmits dynamic power to the carrier 254. The carrier 254 transmits dynamic power to the differential gear 255, and thereby, transmits dynamic power to the drive shaft 230 through a differential shaft.

The lubrication-object member 300 is a member that is lubricated with oil. As the lubrication-object member 300, there are a gear, a shaft, and the like. The lubrication-object member 300 may include a cooling-object member, such as a terminal block.

The oil passage L is a flow passage for supplying the oil fed from the oil pump 100, to the electric motor 200 and the lubrication-object member 300. The oil passage L is formed in the case 10. As shown in FIG. 2, the oil passage L includes a first oil passage L1 and a second oil passage L2.

The first oil passage L1 is a flow passage for supplying the oil fed from the oil pump 100, to the electric motor 200. The first oil passage L1 connects the oil pump 100 and the electric motor 200. The oil supplied to the electric motor 200 flows into the oil retaining portion 12.

In the embodiment, the first oil passage L1 is provided with an oil cooler 120. For example, the oil cooler 120 is constituted by a heat exchanger. The oil cooler 120 cools the oil that flows through the first oil passage L1, using a cooling medium. The oil cooler 120 may be provided in the exterior of the case 10.

The second oil passage L2 is a flow passage for supplying the oil fed from the oil pump 100, to the lubrication-object member 300. The second oil passage L2 branches from the first oil passage L1. As shown in FIG. 2, the second oil passage L2 branches from a site that is of the first oil passage L1 and that is on the downstream side of the oil cooler 120. The oil supplied to the lubrication-object member 300 flows into the oil retaining portion 12.

The flow amount regulation unit 400 can regulate the supply amount of oil to the electric motor 200. The flow amount regulation unit 400 is constituted by a magnetic valve. The flow amount regulation unit 400 is provided in the oil passage L. In the embodiment, the flow amount regulation unit 400 is provided at a site that is of the first oil passage L1 and that is between a connection portion P connecting the first oil passage L1 with the second oil passage L2, and the electric motor 200. The flow amount regulation unit 400 may be provided in the second oil passage L2. Further, the flow amount regulation unit 400 may be constituted by a three-way valve that is provided at the connection portion P.

The control device 500 controls various apparatuses. As shown in FIG. 1, the control device 500 may be disposed in the case 10. The control device 500 includes a control unit 501, a vehicle-side ECU 502, and a pump control unit 503.

The control unit 501 controls the flow amount regulation unit 400. Specifically, the control unit 501 controls the opening degree of the flow amount regulation unit 400. The control unit 501 is constituted by an electronic control unit (ECU). For example, the control unit 501 may control the opening degree of the flow amount regulation unit 400, based on a temperature T of the electric motor 200. For example, the temperature T of the electric motor 200 is detected by a temperature sensor 801 that is provided at the stator 210.

FIG. 4 shows an exemplary control flow of the control unit 501. As shown in FIG. 4, when the electric motor 200 is driven (step S1), the control unit 501 determines whether the temperature T of the electric motor 200 is equal to or higher than a high-reference temperature TH (step S2). In the case where the temperature T of the electric motor 200 is equal to or higher than the high-reference temperature TH as the result, the control unit 501 increases the opening degree of the flow amount regulation unit 400, that is, the cooling amount of the electric motor 200 (step S3).

After step S3 or in the case where the result in step S2 is NO, the control unit 501 determines whether the temperature T of the electric motor 200 is lower than a low-reference temperature TL that is lower than the high-reference temperature TH (step S4). In the case where the temperature T of the electric motor 200 is lower than the low-reference temperature TL as the result, the control unit 501 decreases the opening degree of the flow amount regulation unit 400, that is, the cooling amount of the electric motor 200 (step S5), and returns to step S2. On the other hand, in the case where the temperature T of the electric motor 200 is equal to or higher than the low-reference temperature TL in step S4, the control unit 501 returns to step S2.

The high-reference temperature TH and the low-reference temperature TL are previously set.

The control unit 501 may control the opening degree of the flow amount regulation unit 400, based on the temperature of the oil that flows into the electric motor 200. The temperature of the oil that flows into the electric motor 200 is detected on the downstream side of the oil cooler 120. In the example shown in FIG. 2, the temperature of the oil that flows into the electric motor 200 is detected by a temperature sensor 802 that is provided at the second oil passage L2. However, the temperature sensor 802 may be provided at a site that is of the first oil passage L1 and that is on the downstream side of the oil cooler 120. Also in this case, the flowchart for the control unit 501 is the same as the above flowchart.

Alternatively, the control unit 501 may control the opening degree of the flow amount regulation unit 400, based on the pressure of the periphery of the electric motor 200. For example, the pressure of the periphery of the electric motor 200 means the pressure in the case 240. The pressure in the case 240 is detected by a pressure sensor 803 that is provided in the case 240.

The temperature of the electric motor 200, the temperature of the oil that flows into the electric motor 200, and the pressure of the periphery of the electric motor 200 may be calculated, for example, based on the current value and rotation speed of the electric motor 200, the rotation speed of the oil pump 100, and the cooling amount of the oil cooler 120.

The vehicle-side ECU 502 controls various apparatuses of the vehicle. The control unit 501 may control the flow amount regulation unit 400, based on a signal from the vehicle-side ECU 502.

The pump control unit 503 controls the oil pump 100. The pump control unit 503 can regulate the work amount (rotation speed) of the oil pump 100, depending on the opening degree of the flow amount regulation unit 400. The opening degree of the flow amount regulation unit 400 may be detected by the sensing of the flow amount regulation unit 400 itself, or may be detected based on a signal that is sent to the flow amount regulation unit 400 by the control unit 501.

As described above, in the dynamic power transmission device in the embodiment, the control unit 501 can regulate the supply amount of the oil to the electric motor 200, and therefore, the electric motor 200 is effectively cooled, for example, by increasing the supply amount of the oil to the electric motor 200, so that the frequency of the request for the cooling of the electric motor 200 is reduced. Therefore, the work amount of the oil pump 100 can be reduced.

It is to be understood that the embodiment disclosed above is merely an example in all aspects and in no way intended to limit the invention. The scope of the present disclosure is defined by the scope of the claims and not by the description of the embodiment. All modifications made within the scope and spirit equivalent to those of the claims are included in the invention.

## Claims

1. A dynamic power transmission device (1) comprising:
a single oil pump (100) configured to be able to feed oil;
an electric motor (200);
a lubrication-object member (300) that is lubricated with the oil;
an oil passage (L) configured to supply the oil fed from the oil pump (100) to the electric motor (200) and the lubrication-object member (300);
a flow amount regulation unit (400) provided in the oil passage (L) and configured to be able to regulate a supply amount of the oil to the electric motor (200); and
a control unit (501) configured to control the flow amount regulation unit (400).

2. The dynamic power transmission device (1) according to claim 1, wherein:
the oil passage (L) includes a first oil passage (L1) configured to supply the oil fed from the oil pump (100) to the electric motor (200), and a second oil passage (L2) branching from the first oil passage (L1) and configured to supply the oil fed from the oil pump (100) to the lubrication-object member (300); and
the flow amount regulation unit (400) is provided at a site that is of the first oil passage (L1) and that is between a connection portion (P) connecting the first oil passage (L1) with the second oil passage (L2), and the electric motor (200).

3. The dynamic power transmission device (1) according to claim 1 or 2, wherein the control unit (501) is configured to control an opening degree of the flow amount regulation unit (400), based on a temperature (T) of the electric motor (200).

4. The dynamic power transmission device (1) according to claim 3, wherein the control unit (501) increases the opening degree of the flow amount regulation unit (400) when the temperature (T) of the electric motor (200) is equal to or higher than a high-reference temperature (TH).

5. The dynamic power transmission device (1) according to claim 1 or 2, wherein the control unit (501) is configured to control an opening degree of the flow amount regulation unit (400), based on a temperature of the oil that flows into the electric motor (200).

6. The dynamic power transmission device (1) according to claim 1 or 2, wherein the control unit (501) is configured to control an opening degree of the flow amount regulation unit (400), based on a pressure of a periphery of the electric motor (200).

7. The dynamic power transmission device (1) according to any of claims 1 to 6, wherein:
the electric motor (200) includes a case (10) that houses a rotor (220) and a stator (210); and
the control unit (501) is provided in the case (10).

8. The dynamic power transmission device (1) according to any of claims 1 to 7, wherein the flow amount regulation unit (400) is constituted by a magnetic valve.

9. The dynamic power transmission device (1) according to claim 7, further comprising a pump control unit (503) configured to control the oil pump (100), wherein
the pump control unit (503) is configured to control a rotation speed of the oil pump (100), based on an opening degree of the flow amount regulation unit (400).
